(19)
Europäisches
Patentamt

European
Patent Office

Office européen
des brevets

(11)  **EP 3 393 983 B1**

(12)  **EUROPEAN PATENT SPECIFICATION**

(45) Date of publication and mention
of the grant of the patent:
**27.09.2023  Bulletin 2023/39**

(21) Application number: **16877790.2**

(22) Date of filing: **23.12.2016**

(51) International Patent Classification (IPC):
*C02F 11/02* *(2006.01)*       *C02F 11/12* *(2019.01)*

(52) Cooperative Patent Classification (CPC):
**C02F 11/02; C02F 11/121;** C02F 3/342;
C02F 11/147; Y02W 10/20

(86) International application number:
**PCT/CN2016/111738**

(87) International publication number:
**WO 2017/107980 (29.06.2017 Gazette 2017/26)**

(54) **METHODS FOR ENHANCING THE DEWATERABILITY OF SLUDGE WITH ENZYME TREATMENT**

VERFAHREN ZUR ERHÖHUNG DER ENTWÄSSERBARKEIT VON SCHLÄMME MIT
ENZYMBEHANDLUNG

PROCÉDÉ POUR AMÉLIORER LA DÉSHYDRATABILITÉ DE BOUES PAR TRAITEMENT
ENZYMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **23.12.2015  PCT/CN2015/098479**

(43) Date of publication of application:
**31.10.2018  Bulletin 2018/44**

(73) Proprietor: **EnviroZyme LLC
Bowling Green, OH 43402 (US)**

(72) Inventors:
• **ZHANG, Mingjia
Beijing 100085 (CN)**
• **GURIEFF, Nicholas Bagger
DK-2880 Bagsvaerd (DK)**

(74) Representative: **Haseltine Lake Kempner LLP
Cheapside House
138 Cheapside
London EC2V 6BJ (GB)**

(56) References cited:
**WO-A1-91/10723         WO-A1-96/31439
WO-A1-2015/128095     CN-A- 1 537 163
CN-A- 103 890 165       DE-A1- 10 249 081
DE-A1- 10 249 081       US-A- 5 531 898**

• **JEAN KARAM ET AL.: 'Potential Applications of
Enzymes in Waste Treatment' J. CHEM. TECH.
BIOTECHNOL. vol. 69, no. 2, 30 June 1997, ISSN
0268-2575 pages 141 - 153, XP000696115**

Remarks:
The complete document including Reference
Table(s) and the Sequence Listing(s) can be
downloaded from the EPO website

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

REFERENCE TO SEQUENCE LISTING

This application contains a Sequence Listing in computer readable form.

FIELD OF THE INVENTION

The present invention relates to methods for enhancing the dewaterability of residuals (*i.e.,* sludge) generated by conventional wastewater treatment operations.

BACKGROUND OF THE INVENTION

Sludge, generated during the course of conventional wastewater treatment, is usually dewatered or concentrated prior to disposal by incineration, land application, land filling, composting, etc. A basic dewatering scenario involves forming strong, shear-resistant sludge flocs through the addition of a conditioning agent such as ferric sulphate and/or a flocculating agent (*e.g.,* polyelectrolyte) followed by mechanical solid/liquid separation across gravity belt thickeners, belt filter presses, or centrifuges. By dewatering sludge, the wastewater treatment plant (WWTP) enhances the amount of solids per volumetric unit of sludge (*i.e.,* cake solids) that ultimately must be disposed of. The benefits of higher cake solids include: reduced dewatered sludge volume (less sludge to be "managed" by the plant); lower annual transportation costs (shipping the sludge to landfills or sites of land application); less water to be evaporated before sludge can be incinerated (increasing the net energy value of the sludge when incineration is used for cogeneration purposes); a more concentrated feed to digesters; and/or reduced volume of sludge to be landfilled or land applied.

The generic composition of sludge is generally about 90-99% water, the remaining portion being total solids, with actual cell mass (*i.e.,* bacterial cells) representing approximately 10% of the total solids. The remaining 90% of the total solids consists of extracellular polymeric substance (EPS) which forms a hydrated matrix within which the bacterial cells are dispersed. Sludge dewaterability, regardless of the means used to generate the sludge, has been largely associated with the EPS fraction of the whole sludge. EPS is comprised of debris from cell lysis (*e.g.,* nucleic acid, lipids/phospholipids, protein, etc.), actively secreted extracellular products (*e.g.,* polysaccharides and proteins), products of extracellular, EPS-bound enzymatic activity (*e.g.,* polysaccharides), adsorbed material from the wastewater (*e.g.,* humic substances, multivalent cations). Due to this complex nature of EPS and the predominant presence of polysaccharides and protein, EPS is traditionally characterized by the ratio of carbohydrates to proteins ($EPS_{carb:prot}$). While the $EPS_{carb:prot}$ can vary from primary sludge to primary sludge depending on numerous operational parameters of the WWTP, the EPS composition within secondary sludges is somewhat more digestion specific: anaerobically digested sludge $EPS_{carb:prot}$ tends to be less than unity while aerobically digested sludge $EPS_{carb:prot}$ is greater than unity. In any case, these primary components are considered to be the key hydratable substances within sludge flocs that effectively bind water and resist dewatering.

Methods which disrupt the water-binding capacity and/or mechanical integrity of sludge flocs are believed to enhance the dewaterability of the whole sludge upon polymeric flocculation. Most of such methods have focused on the ability of novel chemistries (*e.g.,* acid pre-treatment, multivalent cationic conditioners) and processes (high temperature pre-treatment, electric discharge, sonication) to disrupt EPS components and improve dewaterability. A number of papers exist describing the use of enzymes for selective hydrolysis within the EPS to reduce the sludge volume, with varying results. See e.g., DE 10249081, WO 91/10723, and DE 3713739.

DE 10249081 discloses treatment of pretreated sludge using enzymes, such as cellulase, hemicellulase, protease and lysozyme.

Prior art of interest includes U.S. Patent Publication No. US 2008/0190845 to DeLozier et al. relating to methods for enhancing the dewaterability of residuals (*i.e.,* sludge) generated by conventional wastewater treatment operations. WO 99/27082 and WO 2003/006602 are of interest as they relate to proteases and variants thereof.

As sludge remains problematic and dewatering difficult, there is a continuous need to improve methods for enhancing the dewaterability of residuals (*i.e.,* sludge) generated by conventional wastewater treatment operations.

**SUMMARY OF THE INVENTION**

The present disclosure relates to a process for enhancing the dewaterability of sludge comprising the steps:

a) generating or obtaining sludge, such as, during conventional wastewater treatment;

b) treating the sludge with a cellulase and hemicellulase enzyme mixture and a protease enzyme, wherein the protease is selected from a protease having at least 90% sequence identity, at least 95% sequence identity, at least 96% sequence identity, at least 97% sequence identity, at least 98% sequence identity, or at least 99% sequence identity to a protease as shown in SEQ ID NO: 1;

c) conditioning the sludge with coagulating and/or flocculating additives;

d) dewatering the enzyme treated sludge with conventional equipment.

BRIEF DESCRIPTION OF THE DRAWINGS

FIG. 1 is a schematic view of wastewater treatment in accordance with the present disclosure.
FIG. 2 is a graph of average polymer dose required for dewatering for each enzyme dosing condition where Enzyme 1 is SAVINASE brand protease and Enzyme 2 is Cellic® CTec3 brand cellulase and hemicellulase complex.
FIG. 3 is a graph of the average dry solids (DS) of the sludge cakes produced in the trials where Enzyme 1 is SAVINASE brand protease and Enzyme 2 is Cellic® CTec3 brand cellulase and hemicellulase complex.
FIG. 4 is a graph of the COD of filtrate samples taken during the trials where Enzyme 1 is SAVINASE brand protease and Enzyme 2 is Cellic® CTec3 brand cellulase and hemicellulase complex.

DETAILED DESCRIPTION OF PREFERRED EMBODIMENTS

The present disclosure relates to an enzymatic method to facilitate and/or improve the process of dewatering sludge, such as, sludge generated during conventional wastewater treatment.

The various processes to treat industrial and municipal wastewater often generate sludge as a by-product of proper operation. Sludges generated by the wastewater treatment industry are classified not only by the source of wastewater (e.g., municipal or industrial) but also by specific stages of the wastewater treatment process. In the broadest classification, sludge is considered primary, secondary or tertiary. Primary sludges are usually considered "raw" as they are often the result of settling of solids from raw wastewater influent passed across primary clarifiers. In most instances, the clarified water is then sent to activated sludge basins (ASBs) in which suspended flocs of microorganisms remove soluble contaminants from the water. As the microorganisms replicate, they must be periodically removed from the ASB to avoid overgrowth. Their removal takes place at a secondary clarifier receiving influent from the ASB. This "secondary sludge" is considered "waste activated sludge" (WAS) and has a relatively universal presence at WWTPs employing biological nutrient removal (BNR) systems. To reduce the volume of (and stabilize) this secondary sludge, the sludge may be sent to aerobic (ambient aeration or pure oxygen) or anaerobic digesters which may be operated under either mesophilic or thermophilic conditions. The resultant "tertiary" sludge is then known as "digested sludge" and may be further classified according to the specifics of digestion (e.g., thermophilic aerobically digested sludge). So, as can be seen, innumerable sludge types are produced during the treatment of wastewater. However, they can be loosely grouped as:

1. Primary or raw sludge;
2. Secondary or waste activated sludge; and
3. Tertiary, stabilized or digested sludge.

Regardless of the means by which it was generated, sludge produced during wastewater treatment operations, usually employing some means of biological nutrient removal, will contain substances that serve as substrates for enzymatic hydrolysis. In most instances, this substrate is present as a component of the extracellular polymeric substances (EPS) that comprise the majority of the sludge solids. The composition of EPS varies from sludge to sludge depending upon a number of variables including the nature of the wastewater to be treated, the treatment process employed and the treatment conditions. Specific monosaccharides (*e.g.,* glucose, mannose, galactose, etc.) tend to be universally present within sludge EPS. Considering this, although the overall composition of the EPS of sludge(s) may differ greatly, there is some degree of similarity in the type of glycosidic linkages present in the sludge components.

According to the present disclosure, cellulase or cellulase/hemicellulase enzyme mixture and protease described herein can be applied to all sludge(s) associated with conventional wastewater treatment specifically to improve dewaterability. The cellulase or cellulase/hemicellulase enzyme mixture and protease enzymes and compositions thereof are applied to tertiary sludge(s) generated during treatment of industrial and municipal waste water. The cellulase or cellulase/hemicellulase enzyme mixture and protease and compositions are applied to digested sludge form such as anaerobically or aerobically digested sludge. A purpose of the present disclosure is to facilitate or improve the process of sludge dewatering including treating sludge with a combination of cellulase or cellulase/hemicellulase enzyme mixture and protease, prior to conventional sludge conditioning and dewatering operations.

The process to enhance the dewaterability of sludge according to the present disclosure comprises or consists of the following steps:

a) generating or obtaining sludge, such as, during conventional wastewater treatment;
b) treating the sludge with a cellulase enzyme and hemicellulase enzyme mixture and protease enzyme wherein the protease is selected from a protease having at least 90% sequence identity, at least 95% sequence identity, at least 96% sequence identity, at least 97% sequence identity, at least 98% sequence identity, or at least 99% sequence identity to a protease as shown in SEQ ID NO:1;
c) conditioning the sludge with coagulating and/or flocculating additives;
d) dewatering the enzyme treated sludge with conventional equipment.

In one aspect, the cellulase or or cellulase/hemicellulase enzyme mixture of the present disclosure includes one or more (*e.g.,* several) proteins selected from the group consisting of a cellulase, a GH61 polypeptide having cellulolytic enhancing activity, and a hemicellulase. In embodiments protease is added to the process stream at the same time, or in combination with the cellulase or or cellulase/hemicellulase enzyme mixture.

The cellulase is one or more (*e.g.,* several) enzymes selected from the group consisting of an endoglucanase, a cellobiohydrolase, and a beta-glucosidase.

The hemicellulase is one or more (*e.g.,* several) enzymes selected from the group consisting of an acetylmannan esterase, an acetylxylan esterase, an arabinanase, an arabinofuranosidase, a coumaric acid esterase, a feruloyl esterase, a galactosidase, a glucuronidase, a glucuronoyl esterase, a mannanase, a mannosidase, a xylanase, and a xylosidase.

The cellulase or or cellulase/hemicellulase enzyme mixture or enzyme composition includes one or more (*e.g.,* several) cellulolytic enzymes. In another aspect, the enzyme composition comprises or further comprises one or more (*e.g.,* several) hemicellulolytic enzymes. In another aspect, the enzyme composition comprises one or more (*e.g.,* several) cellulolytic enzymes and one or more (*e.g.,* several) hemicellulolytic enzymes. In another aspect, the enzyme composition comprises one or more (*e.g.,* several) enzymes selected from the group of cellulolytic enzymes and hemicellulolytic enzymes. In another aspect, the enzyme composition comprises an endoglucanase. In another aspect, the enzyme composition comprises a cellobiohydrolase. In another aspect, the enzyme composition comprises a beta-glucosidase. In another aspect, the enzyme composition comprises a polypeptide having cellulolytic enhancing activity. In another aspect, the enzyme composition comprises an endoglucanase and a polypeptide having cellulolytic enhancing activity. In another aspect, the enzyme composition comprises a cellobiohydrolase and a polypeptide having cellulolytic enhancing activity. In another aspect, the enzyme composition comprises a beta-glucosidase and a polypeptide having cellulolytic enhancing activity. In another aspect, the enzyme composition comprises an endoglucanase and a cellobiohydrolase. In another aspect, the enzyme composition comprises an endoglucanase and a beta-glucosidase. In another aspect, the enzyme composition comprises a cellobiohydrolase and a beta-glucosidase. In another aspect, the enzyme composition comprises an endoglucanase, a cellobiohydrolase, and a polypeptide having cellulolytic enhancing activity. In another aspect, the enzyme composition comprises an endoglucanase, a beta-glucosidase, and a polypeptide having cellulolytic enhancing activity. In another aspect, the enzyme composition comprises a cellobiohydrolase, a beta-glucosidase, and a polypeptide having cellulolytic enhancing activity. In another aspect, the enzyme composition comprises an endoglucanase, a cellobiohydrolase, and a beta-glucosidase. In another aspect, the enzyme composition comprises an endoglucanase, a cellobiohydrolase, a beta-glucosidase, and a polypeptide having cellulolytic enhancing activity.

In another aspect, the enzyme composition comprises a galactosidase (*e.g.,* alpha-galactosidase and/or beta-galactosidase). In another aspect, the enzyme composition comprises a xylanase. In a preferred aspect, the xylanase is a Family 10 xylanase. In another aspect, the enzyme composition comprises an *Aspergillus fumigatus* GH10 xylanase such as disclosed in WO 2006/078256. In another aspect, the enzyme composition comprises a xylosidase (*e.g.,* beta-xylosidase). In another aspect, the enzyme composition comprises *Aspergillus fumigatus* beta-xylosidase such as disclosed in WO 2011/057140.

One or more (*e.g.,* several) components of the enzyme composition may be wild-type proteins, recombinant proteins, or a combination of wild-type proteins and recombinant proteins. For example, one or more (*e.g.,* several) components may be native proteins of a cell, which is used as a host cell to express recombinantly one or more (*e.g.,* several) other components of the enzyme composition. One or more (*e.g.,* several) components of the enzyme composition may be produced as monocomponents, which are then combined to form the enzyme composition. The enzyme composition may be a combination of multicomponent and monocomponent protein preparations.

The enzymes used in the methods of the present disclosure may be in any form suitable for use, such as, for example, a fermentation broth formulation or a cell composition, a cell lysate with or without cellular debris, a semi-purified or purified enzyme preparation, or a host cell as a source of the enzymes. The enzyme composition may be a dry powder or granulate, a non-dusting granulate, a liquid, a stabilized liquid, or a stabilized protected enzyme. Liquid enzyme preparations may, for instance, be stabilized by adding stabilizers such as a sugar, a sugar alcohol or another polyol, and/or lactic acid or another organic acid according to established processes.

Polypeptides having cellulolytic enzyme activity or hemicellulolytic enzyme activity are suitable for use in accordance with the present disclosure including, *e.g.,* GH61 polypeptides having cellulolytic enhancing activity, which can be derived or obtained from any suitable origin, including, bacterial, fungal, yeast, plant, or mammalian origin. The term "obtained" also means herein that the enzyme may have been produced recombinantly in a host organism employing methods described herein, wherein the recombinantly produced enzyme is either native or foreign to the host organism or has a modified amino acid sequence, *e.g.,* having one or more (*e.g.,* several) amino acids that are deleted, inserted and/or substituted, *i.e.,* a recombinantly produced enzyme that is a mutant and/or a fragment of a native amino acid sequence or an enzyme produced by nucleic acid shuffling processes known in the art. Encompassed within the meaning of a native enzyme are natural variants and within the meaning of a foreign enzyme are variants obtained recombinantly.

The one or more (*e.g.,* several) cellulase or cellulase/hemicellulase mixtures include a commercial cellulolytic enzyme preparation. Examples of commercial cellulolytic enzyme preparations suitable for use in the present disclosure include, for example, CELLIC® CTec (Novozymes A/S), CELLIC@ CTec2 (Novozymes A/S), CELLIC@ CTec3 (Novozymes A/S), CELLUCLAST™ (Novozymes A/S), NOVOZYM™ 188 (Novozymes A/S), CELLUZYME™ (Novozymes A/S), CEREFLO™ (Novozymes A/S), and ULTRAFLO™ (Novozymes A/S), ACCELERASE™ (Genencor Int.), LAMINEX™ (Genencor Int.), SPEZYME™ CP (Genencor Int.), FILTRASE® NL (DSM); METHAPLUS® S/L 100 (DSM), ROHAMENT™ 7069 W (Röhm GmbH), FIBREZYME® LDI (Dyadic International, Inc.), FIBREZYME® LBR (Dyadic International, Inc.), or VISCOSTAR® 150L (Dyadic International, Inc.). The cellulase enzymes are added in amounts effective from about 0.005 wt % of solids, *e.g.,* about 0.01 wt % of solids or about 0.1wt % of solids. The cellulase enzymes are added in amounts effective from about 0.005 to 0.1 wt % of solids.

Examples of cellobiohydrolases useful in the present disclosure include, but are not limited to, *Aspergillus aculeatus* cellobiohydrolase II (WO 2011/059740), *Aspergillus fumigatus* cellobiohydrolase I (WO 2011/057140), *Aspergillus fumigatus* cellobiohydrolase II (WO 2011/057140), *Chaetomium thermophilum* cellobiohydrolase I, *Chaetomium thermophilum* cellobiohydrolase II, *Humicola insolens* cellobiohydrolase I, *Myceliophthora thermophila* cellobiohydrolase II (WO 2009/042871), *Thielavia hyrcanie* cellobiohydrolase II (WO 2010/141325), *Thielavia terrestris* cellobiohydrolase II (CEL6A, WO 2006/074435), *Trichoderma reesei* cellobiohydrolase I, *Trichoderma reesei* cellobiohydrolase II, and *Trichophaea saccata* cellobiohydrolase II (WO 2010/057086).

Examples of beta-glucosidases useful in the present disclosure include beta-glucosidases from *Aspergillus aculeatus* (Kawaguchi et al., 1996, Gene 173: 287-288), *Aspergillus fumigatus* (WO 2005/047499), *Aspergillus fumigatus* beta-glucosidase variant (WO 2012/044915), *Aspergillus niger* (Dan et al., 2000, J. Biol. Chem. 275: 4973-4980), *Aspergillus oryzae* (WO 2002/095014), *Penicillium brasilianum* IBT 20888 (WO 2007/019442 and WO 2010/088387), *Thielavia terrestris* (WO 2011/035029), and *Trichophaea saccata* (WO 2007/019442).

The beta-glucosidase may be a fusion protein. In one aspect, the beta-glucosidase is an *Aspergillus oryzae* beta-glucosidase variant BG fusion protein (WO 2008/057637) or an *Aspergillus oryzae* beta-glucosidase fusion protein (WO 2008/057637).

Other useful endoglucanases, cellobiohydrolases, and beta-glucosidases are disclosed in numerous Glycosyl Hydrolase families using the classification according to Henrissat B., 1991, A classification of glycosyl hydrolases based on amino-acid sequence similarities, Biochem. J. 280: 309-316, and Henrissat and Bairoch, 1996, Updating the sequence-based classification of glycosyl hydrolases, Biochem. J. 316: 695-696.

In one aspect, the one or more (*e.g.,* several) hemicellulolytic enzymes for use in accordance with the present disclosure include a commercial hemicellulolytic enzyme preparation. Examples of commercial hemicellulolytic enzyme preparations suitable for use in the present disclosure include, for example, SHEARZYME™ (Novozymes A/S), CELLIC@ HTec (Novozymes A/S), CELLIC@ HTec2 (Novozymes A/S), CELLIC@ HTec3 (Novozymes A/S), VISCOZYME® (Novozymes A/S), ULTRAFLO® (Novozymes A/S), PULPZYME® HC (Novozymes A/S), MULTIFECT® Xylanase (Genencor), ACCELLERASE® XY (Genencor), ACCELLERASE® XC (Genencor), ECOPULP® TX-200A (AB Enzymes), HSP 6000 Xylanase (DSM), DEPOL™ 333P (Biocatalysts Limit, Wales, UK), DEPOL™ 740L. (Biocatalysts Limit, Wales, UK), and DEPOL™ 762P (Biocatalysts Limit, Wales, UK).

Examples of xylanases useful in the methods of the present disclosure include, but are not limited to, xylanases from *Aspergillus aculeatus* (GeneSeqP:AAR63790; WO 94/21785), *Aspergillus fumigatus* (WO 2006/078256), *Penicillium pinophilum* (WO 2011/041405), *Penicillium* sp. (WO 2010/126772), *Thielavia terrestris* NRRL 8126 (WO 2009/079210), and *Trichophaea saccata* GH10 (WO 2011/057083).

Examples of beta-xylosidases useful in the methods of the present disclosure include, but are not limited to, beta-xylosidases from *Aspergillus fumigatus* beta-xylosidase (WO 2011/057140), *Neurospora crassa* (SwissProt accession number Q7SOW4), *Trichoderma reesei* (UniProtKB/TrEMBL accession number Q92458), and *Talaromyces emersonii* (SwissProt accession number Q8X212).

Suitable cellulase and cellulase/hemicellulase mixtures for use in accordance with the present disclosure are described in WO 2013/028928. Suitable enzyme compositions for use in accordance with the present disclosure include *Aspergillus fumigatus* cellobiohydrolase I, *Aspergillus fumigatus cellobiohydrolase* II, an *Aspergillus fumigatus beta-glucosidase* or variant thereof, *Penicillium sp.* (emersonii) GH61 polypeptide having cellulolytic enhancing activity, *Aspergillus fumigatus xylanase,* or *Aspergillus fumigatus beta-xylosidase,* or homologs thereof, may be used.

The cellulase or cellulase/hemicellulase enzyme mixture is applied in amounts effective to facilitate or improve the process of sludge dewatering comprising contacting or treating sludge with cellulase or cellulase/hemicellulase enzyme mixture, preferably, prior to conventional sludge conditioning and dewatering operations such as concentration and mechanical dewatering steps. Examples of suitable amounts include 10 to 2000 g protein per kg of total suspended solids, 10 to 1000 g of protein per kg of total suspended solids, 50 to 500 g of protein per kg of total suspended solids, 100 to 500 g of protein per kg of total suspended solids.

CELLIC® CTec3 (Novozymes A/S), is applied at 0.01-2 kg per dry ton of sludge solids. In embodiments, CELLIC@ CTec3 (Novozymes A/S), is applied at 0.1-1 kg per dry ton of sludge solids. In embodiments, CELLIC@ CTec3 (Novozymes A/S), is applied at 0.5 kg per dry ton of sludge solids. In embodiments, CELLIC@ CTec3 (Novozymes A/S), is applied at suitable amounts including 0.002 to 0.4 g protein per kg of total suspended solids, 0.002 to 0.2 g of protein per kg of total suspended solids, 0.01 to 0.1 g of protein per kg of total suspended solids, 0.02 to 0.1 g of protein per kg of total suspended solids.

The cellulase or cellulase/hemicellulose enzyme mixture may be applied under conditions suitable to the sludge processing conditions, such as, for example, temperatures from 20 to 60°C, pH conditions from 4 to 10, and for a treatment time of 1 to 100 hours, 16 to 72 hours, or 1, 2, 3, 4, 5, 6, 7 days.

The cellulase or cellulase/hemicellulose enzyme mixture is applied in combination with a protease having at least 90% identity to SEQ ID NO: 1 in amounts effective to facilitate or improve the process of sludge dewatering comprising treating sludge with a cellulase or cellulase/hemicellulose enzyme mixture and protease, preferably, prior to conventional sludge conditioning and dewatering operations. Examples of suitable amounts of cellulase or cellulase/hemicellulose enzyme mixture to combine with protease include 0.002 to 0.4 g protein per kg of total suspended solids, 0.01 to 0.1 g of protein per kg of total suspended solids, 0.02 to 0.1 g of protein per kg of total suspended solids. In embodiments, cellulase or cellulase/hemicellulose enzyme mixture is dosed at 1--100 g EP/DT. In embodiments, cellulase or cellulase/hemicellulose enzyme mixture is dosed at about 50 g EP/DT (-50 ppm).

Suitable cellulase and cellulase/hemicellulase mixtures for use in accordance with the present disclosure are described in WO 2013/028928. Suitable enzyme compositions for use in accordance with the present disclosure include *Aspergillus fumigatus* cellobiohydrolase I, *Aspergillus fumigatus cellobiohydrolase* II, an *Aspergillus fumigatus beta-glucosidase* or variant thereof, *Penicillium sp.* (emersonii) GH61 polypeptide having cellulolytic enhancing activity, *Aspergillus fumigatus xylanase,* or *Aspergillus fumigatus beta-xylosidase,* or homologs thereof, may be used.

Protease in accordance with the present disclosure includes SAVINASE® marketed by NOVOZYMES A/S. It is subtilisin 309 from B. *lentus.* SAVINASE® has the amino acid sequence shown in SEQ ID NO: 1.

In embodiments, the protease is the commercial protease enzyme composition SAVINASE brand protease (available from Novozymes North America, Inc. or Novozymes A/S).. In embodiments, the enzyme composition comprises a protease having at least 90% sequence identity, at least 95% sequence identity, at least 96% sequence identity, at least 97% sequence identity, at least 98% sequence identity, or at least 99% sequence identity to a protease as shown in SEQ ID NO:1. For purposes of the present disclosure, the sequence identity between two amino acid sequences is determined using the Needleman-Wunsch algorithm (Needleman and Wunsch, 1970, J. Mol. Biol. 48: 443-453) as implemented in the Needle program of the EMBOSS package (EMBOSS: The European Molecular Biology Open Software Suite, Rice et al., 2000, Trends Genet. 16: 276-277), preferably version 5.0.0 or later. The parameters used are gap open penalty of 10, gap extension penalty of 0.5, and the EBLOSUM62 (EMBOSS version of BLOSUM62) substitution matrix. The output of Needle labeled "longest identity" (obtained using the -nobrief option) is used as the percent identity and is calculated as follows:

$$\text{(Identical Residues} \times 100)/(\text{Length of Alignment} - \text{Total Number of Gaps in Alignment)}$$

In embodiments, the protease such as SAVINASE shown in SEQ ID NO: 1 is applied in amounts effective to facilitate or improve the process of sludge dewatering comprising treating sludge with a cellulase and protease, preferably, prior to conventional sludge conditioning and dewatering operations including but not limited to concentration and mechanical dewatering. Examples of suitable amounts of protease include 0.004 to 0.09 g protein per kg of total suspended solids, 0.002 to 0.02 g of protein per kg of total suspended solids, 0.004 to 0.02 g of protein per kg of total suspended solids. In embodiments, SAVINASE brand protease is dosed at 0.4-90 g EP/DT. In embodiments, SAVINASE brand protease is dosed at 20 g EP/DT (-20 ppm).

SAVINASE protease may be applied under conditions suitable to the sludge processing conditions, such as, for example, temperatures from 20 to 60°C, pH conditions from 4 to 10, and for a treatment time of 1 to 100 hours, 16 to 72 hours, or 1, 2, 3, 4, 5, 6, 7 days.

The cellulase/protease treatment in accordance with the present disclosure may also involve the addition of one or more additional enzymes.

The cellulase/protease treatment in accordance with the present disclosure may also result in an unexpected synergistic enzyme effect on the dewatering process. In accordance with this disclosure, the application of the cellulase/protease treatment will result in a significantly better enhancement of the dewatering process compared to sum of the effect on the dewatering process when the application of the cellulase and protease occurs separately.

In embodiments, treatments in accordance with the present disclosure are applied in the sludge conditioning step where polymers are being currently used. The enzymatic product is a consumable and will not require any hardware with it other than the capability to dispense it appropriately by the wastewater treatment plant. A buffer tank may be applied in embodiments so that enzyme can be applied under conditions in accordance with the present disclosure. In embodiments, treatments in accordance with the present disclosure will completely replace polymer use in wastewater treatment. In embodiments, treatments in accordance with the present disclosure will reduce polymer use in wastewater treatment. In embodiments, the use of enzymes will be system/configuration agnostic. As long as a particular plant is conditioning the sludge prior to dewatering the proposed cellulase/protease compositions in accordance with the present disclosure can be used.

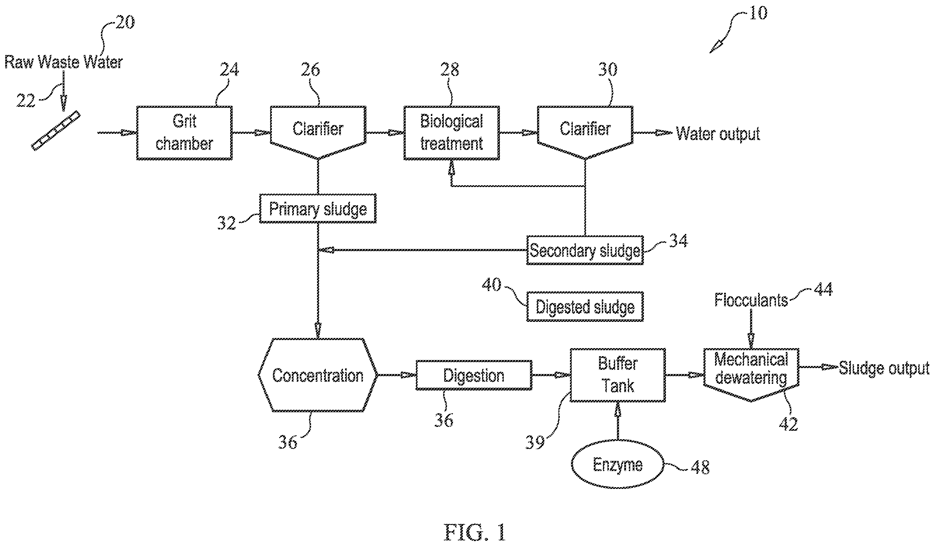

Referring to Fig. 1, a schematic diagram of embodiments of the present disclosure is shown. Here, wastewater treatment (10) is shown where raw wastewater (20) enters treatment and forms a process stream (22). In an example, process stream (22) flows through a grit chamber (24), clarifier (26), biological treatment (28) and clarifier (30) before either recirculating, exiting, or advancing down the process stream. Primary sludge (32) and secondary sludge (34) are shown advancing towards concentration (36). The sludge is shown entering digestion (38) and forming tertiary or digested sludge (40) which enters buffer tank (39) for incubation prior to mechanical dewatering (42), contact with flocculants (44) and sludge output (46). Fig. 1 shows enzyme (48) of the present disclosure such as cellulase or cellulase/hemicellulase mixtures and protease being contacted with the process stream prior to concentration (36) and mechanical dewatering (42). Enzyme (48) can contact the process stream after digestion and/or before or during dewatering.

In embodiments, and as shown in Fig. 1, the enzyme treatment in accordance with the present disclosure including effective amount of cellulase or effective amount of cellulase/hemicellulase enzyme mixture and effective amount of protease is preferably added prior to sludge conditioning (*i.e.,* prior to coagulation and/or flocculation) and mechanical dewatering.

## EXAMPLES

## EXAMPLE 1

## Materials

Digested sludge from a municipal wastewater plant
Cellic® CTec3 brand cellulase and hemicellulase complex (available from Novozymes A/S).
SAVINASE brand protease (available from Novozymes A/S).
Heating cabinet (30°C)

### *Pretreating Method*

1. Measure 30 mL of sludge into a 50 mL tube
2. Add sufficient amount of liquid Cellic® CTec3 brand cellulase and hemicellulase complex and SAVINASE brand protease to the sludge sample
3. Seal the reaction tube and put into a heating cabinet at 30°C
4. Remove from heating cabinet after 24 hrs of reaction time
5. The sludge sample is now a pretreated sludge composition and ready for use in dewatering trials

## LAB SCALE DEWATERING: MATERIALS & METHOD

*Materials*

- A potato ricer or press
- Flocculent - cationic polyacrylamide high molecular weight polymer
- A beaker for mixing sludge and flocculent
- A filter cloth
- Crucible for dry solids analysis

*Method*

1. Prepare the polymer solution by mixing the polymer (in solid or emulsion form) into the required amount of de-ionized water to prepare a 0.25% active solution. Prepare 30 min before being required.
2. Once the polymer is ready, pour the sludge sample into a beaker.
3. Using a pipette, add a known volume of polymer solution. Stir immediately using an even, but not too vigorous action. A maximum of 0.5 mL should be added at a time.
4. Continue adding polymer solution to the sludge until the majority of the sludge solids is in a floc and the free water is clear. Record the volume of polymer solution added and also note the quality of the floc.
5. Once the sludge is flocculated, it can be pressed. Place the filter cloth into the press and the pour the sludge into it. Beware not to lose any sludge around the cloth, and place a beaker under the press to capture the filtrate.
6. Once the sludge is in the filter cloth, wrap it carefully so that no sludge can escape once the press is applied. Ensure all the filtrate is captured.
7. Press the sludge as much as possible, and then tie the handles to together using a quick-tie. This will be your reference pressure for the following samples.
8. After 120-180 sec, release the pressure by removing the quick-tie and unwrap the sludge cake.
9. Carefully peel the sludge cake from the cloth and place in the pre-weighed crucible. Weigh the crucible + cake and then allow to dry at 105°C for at least 12 hrs.
10. Remove crucible after drying and weigh the crucible + dry cake. The dry solids content of the cake can then be calculated.
11. Take the filtrate and undertake COD and turbidity analyses, taking note of the volume used. Use the remaining to undertake a dry solids analysis at 105°C.

**RESULTS**

Each sample was processed in triplicate. The results from the trial are in Table 1:

**Table 1:** Results from trials (average results with standard deviation in parentheses underneath)

TABLE 1

| Sample | Vol. (mL) | Protease | Dose (kg-product /t-DS) | Cellu-lase | Dose (kg-product /t-DS) | Poly-mer | Polymer Dose Avg. (kg/t-DS) | Supernatant Turbidity Avg. (ABS 450nm) | Cake Solids Avg. (% w/w) |
|---|---|---|---|---|---|---|---|---|---|
| Sludge only | 30 | | | | | PAM | 9.4 (0.0) | 0.134 (0.002) | 18% (0.7%) |
| Protease only | 30 | Savinase | 1.0 | | | PAM | 8.9 (0.6) | 0.336 (0.004) | 17% (0.4%) |
| Cellulase only | 30 | | | CTec3 | 1.0 | PAM | 9.2 (0.6) | 0.388 (0.006) | 16% (0.2%) |
| Protease + Cellulase | 30 | Savinase | 1.0 | Ctec3 | 1.0 | PAM | 7.7 (0.2) | 0.212 (0.003) | 17% (0.7%) |

The results indicate that the protease SAVINASE® brand protease from Novozymes A/S and cellulase such as Cellic® CTec3 brand cellulase and hemicellulase complex from Novozymes A/S when applied alone resulted in a 5% and 2% reduction in polymer requirement, respectively, compared to the sludge only sample. When the same dose of enzymes was applied together, an 18% reduction in polymer requirement was realized.

The combination of protease and cellulase also lead to an improved quality in the filtrate compared to when the enzymes were applied singly. The application of the protease and cellulase together did not lead to a lower cake dryness or degradation in filtrate quality compared to the sludge only control sample.

**Example 1 Conclusions**

- The application of the protease and cellulase separately did not provide a significant decrease in the polymer consumption required to achieve a good level of solids flocculation and dewaterability using the press method
- The application of the protease and cellulase together lead to a significant decrease in polymer requirement, while maintaining the quality of the filtrate and the dryness of the cake achieved in the dewatering process

**EXAMPLE 2**

**Materials**

Digested sludge from a municipal wastewater plant
Cellic® CTec3 brand cellulase and hemicellulase complex (available from Novozymes A/S). SAVINASE brand protease (available from Novozymes A/S).
Heating cabinet (30°C)

**Method**

1. Measure 30 mL of sludge into a 50 mL tube
2. Add the required amount of liquid enzyme product to the sludge sample
3. Seal the reaction tube and put into a heating cabinet at 30°C
4. Remove from heating cabinet after required reaction time (24, 48 and 72 hrs)
5. The sludge sample is now ready for use in dewatering trials

**Table 2:** Experiment set-up used in the trials conducted

|  | 24 hrs | 48 hrs | 72 hrs |
|---|---|---|---|
| **Control**<br>*Sludge only* | 3 samples | 3 samples | 3 samples |
| **Enzyme 1 SAVINASE**<br>*125 g product/t-DS* | 3 samples | 3 samples | 3 samples |
| **Enzyme 2- CTec3**<br>*125 g product/t-DS* | 3 samples | 3 samples | 3 samples |
| **Enzyme 1 + 2**<br>*250 g product/t-DS* | 3 samples | 3 samples | 3 samples |
| **Sludge only**<br>*Polymer dose at lowest level used with enzyme samples* | 3 samples | 3 samples | 3 samples |

**LAB SCALE DEWATERING: MATERIALS & METHOD**

*Materials*

- A potato ricer or press
- Flocculent - Flopam FO-4490 (SNF) prepared in a 0.3% solution with deionized water
- A beaker for mixing sludge and flocculent
- Filter cloths
- Crucible for dry solids analysis
- Hach Lange COD kits (0-1500 mg/L)

*Method*

Apply the same methods steps as set forth in Example 1 above.

**RESULTS**

The results for the trials focused on three key parameters for dewatering:

1. Polymer dose required
2. Dry solids of the cake produced
3. COD in the filtrate produced in the dewatering process

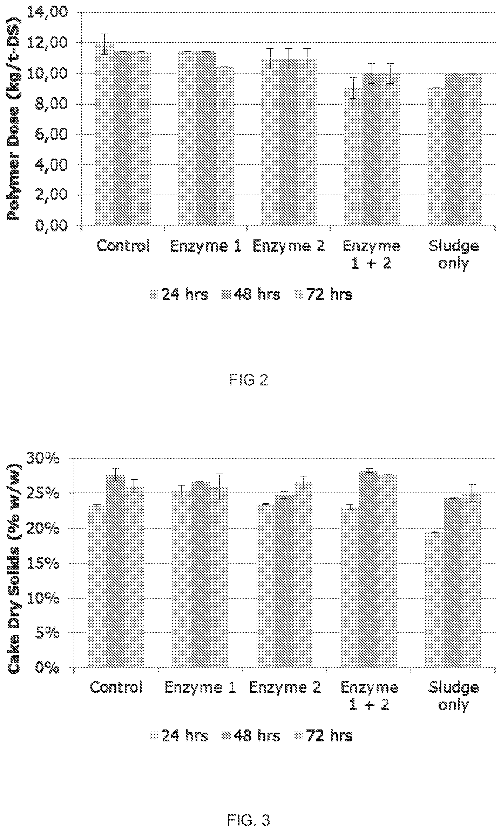

When considering the polymer dose required, the results are presented in FIG. 2 Samples were taken after 24, 48 and 72 hrs.

After 24 hours, a 24% reduction (equivalent to 2.85 kg-polymer/t-DS) the polymer dose required for dewatering was achieved when Enzymes 1+2 were used to pre-treat the sludge. After 48 and 72 hrs, a reduction of 13% in the polymer dose required was achieved (equivalent to 1.43 kg-polymer/t-DS), when the two enzymes were used together to pre-treat the sludge.

After 24 hours, the addition of the Savinase and CTec3 enzymes together led to a significantly greater reduction in polymer requirement compared to when the enzymes were added singly. This indicates that the two enzymes have a synergistic effect for reducing polymer requirement when used together on anaerobically digested sludge.

In each case the polymer reduction achieved was > 10%.

The dry solids (DS) of the cakes produced in the dewatering trials are presented in FIG. 3. Samples were taken after 24, 48 and 72 hrs.

After 24 hours of incubation time, the application of Enzyme 1 lead to an average increase in DS of 2% points. The application of Enzyme 2 alone, or both enzymes together led to a DS that was the same as the control sample. With the sludge only sample, where polymer was dosed at the lowest level needed in the enzyme pre-treated samples, the DS of the cake was significantly lower than the control or enzyme treated samples. This indicates that enzyme pre-treatment not only allows for a decrease in polymer dose needed for dewatering, but has the potential to maintain or improve the DS of the cake produced compared to a current situation (control sample).

After 48 hours of incubation, there was no positive impact of the enzyme pre-treatments on the DS of the cake when compared to the control sample. While the samples incubated with both enzyme products was able to maintain the same DS as the control, the single enzyme incubated samples showed slight average decreases in cake DS. All of the enzyme pre-treated samples were better than the sludge only sample.

After 72 hours of incubation, the samples incubated with both enzymes had an average DS content that was 2% higher than the control sample. There was no significant impact on the cake DS when only one enzyme was applied to the sludge samples. All of the enzyme pretreated samples were better than the sludge only sample.

The cake DS results indicate that enzymatic pre-treatment has a positive effect on the cake DS achieved. After 24 hours, the Enzyme 1 product was able to provide an increase in DS.

In all cases, the enzyme pre-treatment seems to be able to counter-balance the lower polymer dose provided in the sludge only sample, allowing the dewatering process to achieve the same or improved cake DS, with a significantly lower dose of polymer. The results indicate that a longer retention time at the site could lead to positive benefits with regards to DS increase in the cake produced in the dewatering process.

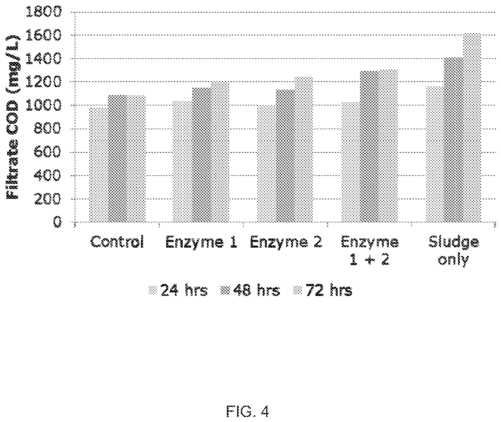

The quality of the filtrate was monitored during the trials through the measurement of COD in the filtrates. A total COD was used, capturing both contributions from soluble and insoluble components in the filtrate. The results of this analysis are presented in FIG. 4. Samples were taken after 24, 48 and 72 hrs.

In all cases, the longer the retention time, the higher the COD in the filtrate. This is likely caused by the solubilization of the sludge either through natural processes in the sludge or assisted by enzymatic activity. After 24 hrs, the impact of the enzymes on the COD in the filtrate is minimal. However, after 48 and 72 hrs, there is a clear effect of the enzymatic activity - which is seen in the significantly increased concentration of COD in the filtrate. This indicates that after 24 hrs, the enzymes have only been active on the "soluble" biocolloid component of the sludge. This is confirmed by the significant polymer dose reduction seen after 24 hrs. However, as the retention time increases, the enzymes have a more significant impact on the bulk solids in the sludge. This enzymatic activity releases more biocolloid type materials into the sludge, thereby increasing the COD of the filtrate, but allowing for a better mechanical dewatering of the sludge (better able to compress the solids). These results support the results presented above for polymer dose reduction and cake DS increase.

The COD in the filtrate of the sludge only samples (where a lower dose of polymer was used on sludge that was not pre-treated with enzymes) was always significantly higher than the control sample, or the enzyme pre-treated samples. This is due to the poorer solids capture in these samples, with the increase in COD caused by solids in the filtrate.

In summary, the best performing samples for each retention time are listed in Table 3:

**Table 3:** Summary of best case scenarios for each retention/incubation time tested

|  | 24 hrs | 48 hrs | 72 hrs |
|---|---|---|---|
| **Polymer reduction** | Enzymes 1+2 - 24 % | Enzymes 1+2 - 13 % | Enzyme 1+2 - 13 % |
| **Cake DS increase** | Enzyme 1 + 2 % points | Enzymes 1+2 < 1 % point | Enzymes 1+2 + 2 % points |

**CONCLUSIONS OF EXAMPLE 2**

Overall, the application of enzymes to the sludge digested sludge sample showed positive results, both with regards to polymer reduction and cake solids increase. Key findings from this trial on digested sludge include:

- The combination of Savinase and CTec3 led to a significantly higher level of polymer reduction required in the dewatering process compared to the control sample or when the enzymes were added separately. This indicates that there is a synergistic effect when the enzymes are added together.
- The effect of the enzymes on polymer reduction decreases over time, likely due to the activity of the enzymes on the sludge solids, releasing more "soluble" biocolloids. This is reflected in the filtrate COD results.
- Generally, the results indicate that a shorter enzyme incubation time is more suitable for polymer reduction, while a longer retention time can provide significant cake DS benefits. This outcome fits well when the enzyme products that are applied are considered, and their activity on the bulk solids in the sludge is confirmed in the COD results.

**Claims**

1. A process for enhancing dewaterability of sludge comprising the steps:

   a) generating or obtaining sludge, such as, during conventional wastewater treatment;
   b) treating the sludge with a cellulase and hemicellulase enzyme mixture and a protease enzyme, wherein the protease is selected from a protease having at least 90% sequence identity, at least 95% sequence identity, at least 96% sequence identity, at least 97% sequence identity, at least 98% sequence identity, or at least 99% sequence identity to a protease as shown in SEQ ID NO:1;
   c) conditioning the sludge with coagulating and/or flocculating additives;
   d) dewatering the enzyme treated sludge with conventional equipment.

**Patentansprüche**

1. Verfahren zur Erhöhung der Entwässerbarkeit von Schlamm, umfassend die folgenden Schritte:

a) Erzeugen oder Erlangen von Schlamm, wie etwa während der herkömmlichen Abwasserbehandlung;

b) Behandeln des Schlamms mit einer Cellulase- und Hemicellulase-Enzymmischung und einem Proteaseenzym, wobei die Protease ausgewählt ist aus einer Protease mit mindestens 90 % Sequenzidentität, mindestens 95 % Sequenzidentität, mindestens 96 % Sequenzidentität, mindestens 97 % Sequenzidentität, mindestens 98 % Sequenzidentität oder mindestens 99 % Sequenzidentität zu einer Protease, wie sie in SEQ-ID-NR: 1 gezeigt ist;

c) Konditionieren des Schlamms mit Koagulations- und/oder Flockungszusatzstoffen;

d) Entwässern des enzymbehandelten Schlamms mit herkömmlicher Ausrüstung.

**Revendications**

1. Procédé d'amélioration de la capacité de déshydratation de boues comprenant les étapes :

a) de génération ou d'obtention de boues, comme lors du traitement conventionnel d'eaux usées ;

b) de traitement des boues avec un mélange d'enzymes cellulase et hémicellulase et une enzyme protéase, dans lequel la protéase est choisie parmi une protéase ayant au moins 90 % d'identité de séquence, au moins 95 % d'identité de séquence, au moins 96 % d'identité de séquence, au moins 97 % d'identité de séquence, au moins 98 % d'identité de séquence ou au moins 99 % d'identité de séquence avec une protéase telle que présentée dans SEQ ID NO : 1 ;

c) de conditionnement des boues avec des additifs coagulants et/ou floculants ;

d) de déshydratation des boues traitées aux enzymes avec un équipement conventionnel.

FIG. 1

FIG 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 10249081
- WO 9110723 A
- DE 3713739
- US 20080190845 A, DeLozier
- WO 9927082 A
- WO 2003006602 A
- WO 2006078256 A
- WO 2011057140 A
- WO 2011059740 A
- WO 2009042871 A
- WO 2010141325 A
- WO 2006074435 A
- WO 2010057086 A
- WO 2005047499 A
- WO 2012044915 A
- WO 2002095014 A
- WO 2007019442 A
- WO 2010088387 A
- WO 2011035029 A
- WO 2008057637 A
- WO 9421785 A
- WO 2011041405 A
- WO 2010126772 A
- WO 2009079210 A
- WO 2011057083 A
- WO 2013028928 A

### Non-patent literature cited in the description

- **KAWAGUCHI et al.** *Gene,* 1996, vol. 173, 287-288
- **DAN et al.** *J. Biol. Chem.,* 2000, vol. 275, 4973-4980
- **HENRISSAT B.** A classification of glycosyl hydrolases based on amino-acid sequence similarities. *Biochem. J.,* 1991, vol. 280, 309-316
- **HENRISSAT ; BAIROCH.** Updating the sequence-based classification of glycosyl hydrolases. *Biochem. J.,* 1996, vol. 316, 695-696
- **NEEDLEMAN ; WUNSCH.** *J. Mol. Biol.,* 1970, vol. 48, 443-453
- **RICE et al.** EMBOSS: The European Molecular Biology Open Software Suite. *Trends Genet.,* 2000, vol. 16, 276-277